(19) Europäisches Patentamt
European Patent Office
Office européen des brevets

(11) **EP 1 582 782 B1**

(12) **EUROPEAN PATENT SPECIFICATION**

(45) Date of publication and mention
of the grant of the patent:
**30.11.2016 Bulletin 2016/48**

(51) Int Cl.:
***F16J 15/08*** *(2006.01)*

(21) Application number: **05005619.1**

(22) Date of filing: **15.03.2005**

(54) **Metal gasket**

Metalldichtung

Joint métallique

(84) Designated Contracting States:
**DE FR GB**

(30) Priority: **30.03.2004 JP 2004100006**
**31.03.2004 JP 2004102172**
**31.03.2004 JP 2004102178**

(43) Date of publication of application:
**05.10.2005 Bulletin 2005/40**

(73) Proprietor: **NICHIAS CORPORATION**
**Chuo-ku**
**Tokyo**
**104-8555 (JP)**

(72) Inventors:
• **Fujino, Michio**
**Yokohama-shi,**
**Kanagawa (JP)**
• **Searashi, Shunichi**
**Toyota-shi,**
**Aichi (JP)**
• **Imanaka, Hironobu**
**Yokohama-shi,**
**Kanagawa (JP)**
• **Murata, Takeshi**
**Toyota-shi,**
**Aichi (JP)**
• **Watanabe, Katsumi**
**Fujisawa-shi,**
**Kanagawa (JP)**

(74) Representative: **Grünecker Patent- und**
**Rechtsanwälte**
**PartG mbB**
**Leopoldstraße 4**
**80802 München (DE)**

(56) References cited:
EP-A- 1 306 587    EP-A1- 0 592 142
DE-A1- 19 857 026    JP-A- 2003 171 489
JP-U- H0 612 870    US-A- 5 277 434

• **PATENT ABSTRACTS OF JAPAN vol. 2003, no.**
**12, 5 December 2003 (2003-12-05) & JP 2003**
**287135 A (NICHIAS CORP), 10 October 2003**
**(2003-10-10)**

**Description**

The present invention relates to a metal gasket interposed, e.g., between a cylinder block and a cylinder head of an internal combustion engine.

[Reference 1] JP 2003-287135 A
[Reference 2] JP 5-86070 U
[Reference 3] JP 6-32836 U

In an internal combustion engine, a metal gasket is interposed on a joint surface between a cylinder block and a cylinder head and fastened, thereby imparting a sealing function. In particular, sealing in an area surrounding a cylinder port is important, and insufficient sealing in this portion causes a pressure drop in a combustion chamber and overheat. Consequently, as a metal gasket enhanced in sealing performance, a metal gasket constituted so that a thin metal plate is arranged and laminated between a pair of elastic metal substrates having beads concentric with cylinder ports, the thin metal plate having an opening corresponding to the above-mentioned cylinder ports (for example, see reference 1).

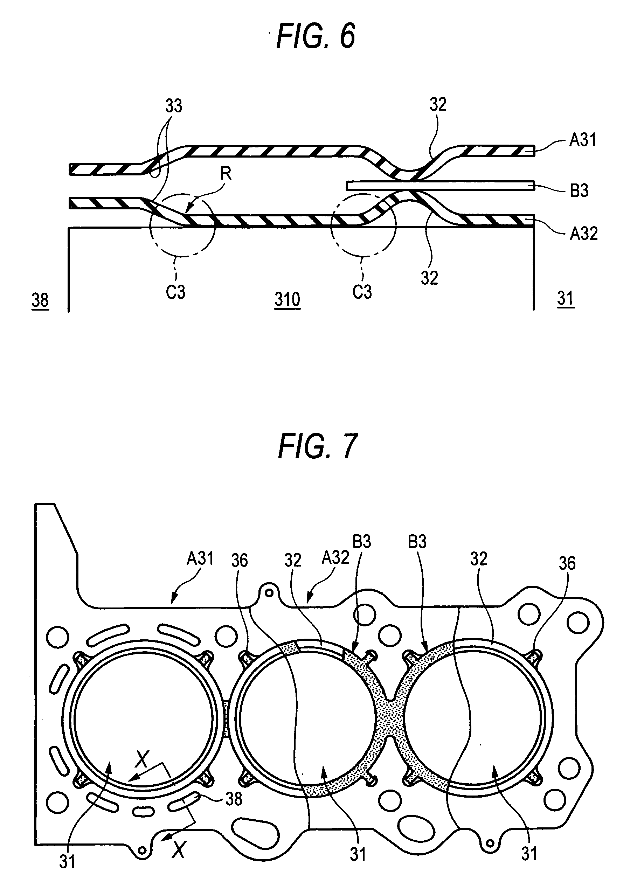

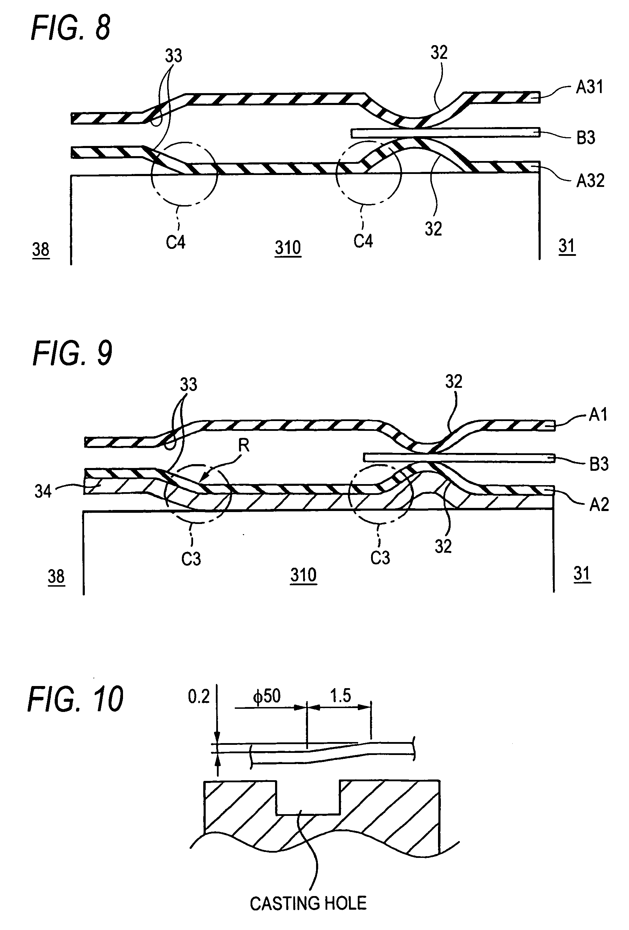

Fig. 7 shows a partially cutaway plane view showing a metal gasket described in reference 1, and Fig. 8 is a cross sectional view taken on line X-X of Fig. 7. As shown in Fig. 7 and Fig. 8, the metal gasket of the reference 1 is constituted by laminating a thin metal plate B3 and a pair of elastic metal substrates A31 and A32, the thin metal plate B3 having openings corresponding to cylinder ports 31 and a plane shape in which three rings are connected, and the elastic metal substrates A31 and A32 having cylinder ports 31 provided corresponding to the cylinder ports 31 of the thin metal plate B3 and convex beads 32 formed on peripheral portions of the cylinder ports 31, so as to hold peripheral portions of the cylinder ports 31 of the thin metal plate B3 between the beads 32 of the elastic metal substrates A31 and A32. Further, the elastic metal substrates A31 and A32 of the metal gasket are also provided with similar beads 33 on peripheral portions of openings 38 for piping. The reference numeral 36 in Fig. 7 designates a locking claw for locking the thin metal plate B3 to the elastic metal substrates A31 and A32.

In the metal gasket of the reference 1, the sealing function in a peripheral portion surrounding the cylinder port is enhanced by utilizing repulsion of the bead generated at the time when the metal gasket is fastened with a bolt. However, casting holes (i.e., minute cavities on a surface due to bubbles developed in casting, see Fig. 10) are formed on a surface of the cylinder block or the cylinder head, or the surface is roughened, in many cases. It is therefore considered that only the elastic metal substrates can not sufficiently follow the casting holes or the roughened surface, and there is the possibility of deteriorating sealing properties. Further, a metal gasket has also been proposed in which a solid rubber layer that is not foamed (hereinafter referred to as "unfoamed rubber layer") is formed on an elastic metal substrate. However, there is similarly the possibility of deteriorating sealing properties by the casting holes or the roughened surface.

On the other hand, it is also carried out that a foamed rubber layer is formed on a metal gasket to enhance sealing performance (e.g., see references 2 and 3). Although the foamed rubber layer in the references generally exhibits excellent sealing properties in such a case that casting holes having a diameter of 1.5 mm or less exist on a surface to be sealed, or the surface roughness thereof is 12.5 Ra or less (10-point average roughness according to JIS B0601-1994), in such a case that the diameter of the casting holes exceed 1.5 mm or the surface roughness exceeds 12.5 Ra, the foamed rubber layer does not secure sufficient sealing properties in some cases. Further, it is generally difficult to achieve foaming (particularly with a foaming factor of 2 or more) when a thickness of a rubber layer before foaming is not lower than about 70 $\mu$m. Further, the rubber layer before foaming of the metal gasket with the foamed rubber layer is relatively thick, the foamed rubber layer deteriorates under the conditions of a high temperature and a high pressure to result in a reduction in axial force of a bolt. In order to obtain the foamed rubber layer, a micro-encapsulation and a heat decomposition method using a chemical foaming agent are generally employed. Since a foamed rubber layer obtained by the micro-encapsulation has a low foaming factor, such foamed rubber layer has a lower effect for sealing casting holes. Also, since many of cells of the foamed rubber layer are separately closed (hereinafter referred to as "closed cells"), shrinkage of each of the cells is caused at a low temperature (lower than 0°C), thereby causing a reduction in axial force of a bolt. Further, when a sealing surface pressure is insufficient, the foamed rubber layer does not perfectly crush to cause the foamed rubber layer to deteriorate during use, thereby undesirably resulting in a stress relaxation of a bolt. In addition, the temperature around the cylinder port becomes considerably high, so that the foamed rubber layer is thermally deteriorated in a relatively early stage to cause deterioration of sealing performance in some cases.

Here, a "foaming factor" means a ratio of the thickness of a rubber layer after foaming to that before foaming. EP 0 592 142, a patent family member of reference 3, discloses a metal gasket according to the preamble of claim 1.

EP 1 306 587 A discloses a metal gasket for sealing two parts which comprises a metal gasket member and at least two seal coatings coated on the two surfaces of the gasket member to constitute sealing lines, wherein the sealing coating comprises a foamed coating and a micro sealing coasting.

The object of the present invention is to provide a metal gasket whose foamed rubber layer does not deteriorate under high temperature and pressure and does not shrink at low temperature, and which can sufficiently seal even a cylinder block having large casting holes or a high surface roughness.

Said object is achieved by a metal gasket with the features of claim 1.

An embodiment of the metal gasket is preferred, wherein the first elastic metal substrate, which is disposed so as to face the cylinder block, has the foamed rubber layers disposed on both sides thereof.

Furthermore, an embodiment of the metal gasket is preferred, which further comprises an unfoamed rubber layer, wherein the first elastic metal substrate, which is disposed so as to face the cylinder block, has a first surface that faces to the cylinder block and a second surface opposite to the first surface, wherein the first elastic metal substrate has the foamed rubber layer disposed on the first surface and the unfoamed rubber layer disposed on the second surface.

In addition to these, an embodiment of the metal gasket is preferred, which further comprises a third elastic metal substrate and unfoamed rubber layers, wherein each of the first and second elastic metal substrates have the unfoamed rubber layers disposed on both sides thereof, wherein the third elastic metal substrate comprises: third opening capable of accommodating the first elastic metal substrate; a bead formed on a peripheral portion of the third opening; and the foamed lubber layers disposed on both sides thereof, wherein the first elastic metal substrate is fixed to the third elastic metal substrates with plural connecting members.

An embodiment of the metal gasket is also preferred, wherein the bead has a flection comprising a curved portion having a curvature radius of 0.5 mm or more in a cross-sectional surface perpendicular to the circumferential direction of the bead, wherein the first elastic metal substrate, which is disposed so as to face the cylinder block, has a first surface that faces to the cylinder block and a second surface opposite to the first surface, wherein the first elastic metal substrate has the foamed rubber layer disposed on the first surface.

In the present invention, open cells mean cells that intercommunicate each other. Furthermore, an "open cell ratio" means a ratio of the volume of open cells to the volume of total cells in a foamed rubber layer.

Fig. 1 is a plane view showing one embodiment of a metal gasket of the invention.

Fig. 2 is a cross sectional view taken on line X-X of Fig. 1.

Fig. 3 is a cross sectional view showing other embodiment of a metal gasket of the invention, taken along line X-X of Fig. 1.

Fig. 4 is a plane view showing other embodiment of a metal gasket of the invention.

Fig. 5 is a cross sectional view taken on line X-X of Fig. 4.

Fig. 6 is a cross sectional view taken on line X-X of Fig. 7 for an example of a shape of a elastic metal substrate of a metal gasket of the invention.

Fig. 7 is a partially cutaway plane view showing a conventional metal gasket.

Fig. 8 is a cross sectional view taken on line X-X of Fig. 7 for the conventional metal gasket.

Fig. 9 is a cross sectional view showing other embodiment of a metal gasket of the invention, taken along line X-X of Fig. 7.

Fig. 10 is a schematic view for illustrating a method of a casting hole seal test conducted in the Examples.

The invention will be described in detail below.

A metal gasket of the present invention is a metal gasket disposed between a cylinder head and a cylinder block, which comprises: a thin metal plate having opening; a pair of elastic metal substrates; at least one foamed rubber layer, wherein each of the pair of elastic metal substrates have opening and a bead formed on a peripheral portion of the opening, wherein the thin metal plate was disposed between the beads of the pair of elastic metal substrate, and wherein the at least one foamed rubber layer is provided by a process comprising foaming a pre-foamed layer comprising a pre-foamed composition, wherein the pre-foamed layer has a thickness of 15 to 50 μm and a foaming factor of 2 to 4. Thereby, it is possible to provide a metal gasket whose foamed rubber layer does not deteriorate under high temperature and pressure and does not shrink at low temperature, and which can sufficiently seal even a cylinder block having large casting holes or high surface roughness.

A pre-foamed composition used for forming the foamed rubber layer preferably contains 20 to 70 wt%, based on the total weight of the pre-foamed composition, of a polymer having a mooney value of 10 to 70. More preferably, the mooney value is 20 to 60, and the content is 20 to 60 wt% based on the total weight of the pre-foamed composition. By using such polymer, it is possible to effectively prevent a deterioration of the foamed rubber layer.

The polymer is not limited in type as far as the mooney value is in the above-described range. Examples thereof include those that have heretofore been used for gaskets, such as an NBR, an HNBR, a fluororubber, an EPDM, and an acrylic rubber. It is preferable to use the NBR, HNBR, and the fluororubber. Also, in the case of using the NBR, it is preferable that a content of acrylonitrile group in NBR ( hereinafter referred to as an " AN value") is from 39 to 52, more preferably from 40 to 48, for the purpose of imparting an oil resistance.

Further, the pre-foamed composition preferably contains a heat decomposable chemical foaming agent. Although the heat decomposable foaming agent is not limited, it is preferable that a foaming temperature thereof is 120°C or more, more preferably from 150 to 210°C. An amount of the foaming agent in the pre-foamed composition is preferably from 20 to 60 wt%, more preferably from 15 to 35 wt%, based on the total weight of the pre-foamed composition.

Further, a vulcanizing agent and a vulcanization accelerator is preferably added to the pre-foamed composition. The vulcanizing agent is preferably added in a large amount so as to achieve a high vulcanization density. In the case of sulfur vulcanization, the vulcanizing agent is preferably used at 1.5 to 4.5 phr. It is preferable to use the vulcanization accelerator which enables rapid vulcanization, i.e., which provides a time period required for reaching to T50 in Curast data at 150°C of four minutes or less. A time period required for reaching to T50 in Curast data at 150°C means a time period that a rubber requires to reach T50 when vulcanization is done at 150°C.

The above pre-foamed composition is dissolved into an organic solvent to obtain a coating liquid which is applied on the steel plate to obtain a pre-foamed layer.

The organic solvent is not limited as far as it dissolves the pre-foamed composition. An example thereof is a mixed solvent of 10 to 90 wt% of an aromatic hydrocarbon-based (or ketone-based) solvent such as toluene and 10 to 90 wt% of an ester-based solvent. The pre-foamed composition is dissolved into the organic solvent in such a way that a solid concentration thereof is preferably 10 to 60 wt% based on the weight of the coating liquid.

Although a method of applying the coating liquid containing the pre-foamed composition is not particularly limited, it is preferable to employ a method that enables to control a thickness of the pre-foamed layer. Examples thereof include a coating method using a gap coater or a roll coater. The coating thickness is preferably from 15 to 50 μm, and the foaming agent is foamed by a heat treatment at preferably about 150 to 240°C for 5 to 15 minutes to form the foamed rubber layer. The foaming conditions such as the vulcanizing agent, the foaming agent, and the heating time are suitably adjusted so that the pre-foamed layer has a foaming factor of from 2 to 4, and the foamed rubber layer to be obtained has an open cell ratio of 80% or more. It is possible to control the foaming factor by using the polymer having the above-described mooney value and adding the vulcanizing agent and the foaming agent to the polymer at the above-described proportion. Particularly, the foaming factor depends on the mooney value of the polymer and the vulcanization speed. When the mooney value of the polymer is too low, the polymer is expanded too much by a foaming gas. When the mooney value is too high, the expansion of the polymer by the foaming gas is suppressed. When the vulcanizing speed is too high, the vulcanization progresses before the polymer is expanded by the foaming gas to suppress the foaming factor. When the vulcanization speed is too low, the polymer is expanded by the foaming gas before the rubber is cured by the vulcanization to increase the foaming factor. For instance, when a polymer having a mooney value of 20 to 40 is used in combination with a vulcanization accelerator of a low vulcanizing speed (Curast data: a time period required for reaching to T50 at 150°C is about 5 to 6 minutes) and a foaming agent of a low decomposition temperature, the foaming factor is increased. On the other hand, when a polymer having a mooney value of 40 to 60 is used in combination with a vulcanization accelerator of a high vulcanizing speed (Curast data: a time period required for reaching to T50 at 150°C is about 1 to 3 minutes) and a foaming agent of a high decomposition temperature, the foaming factor is reduced. Thus, the foaming factor is controlled by changing the combination of the polymer, the vulcanization accelerator, and the foaming agent.

In the present invention, the thin metal plate preferably has a thickness of 0.05 to 0.15 mm. The thin metal plate is preferably made of a stainless steel.

Such a foamed rubber layer is inhibited in deterioration even under high temperature and pressure, and maintains good sealing properties for a long period of time. Further, the foamed rubber layer is inhibited in shrinkage at low temperature. Furthermore, even when a casting hole having a diameter exceeding 1.5 mm exists on the surface of the cylinder block or the surface roughness thereof exceeds 12.5 Ra, sufficient sealing properties can be maintained.

Examples of several embodiments of the present invention are now illustrated, but it should be understood that the present invention is not to be construed as being limited thereto.

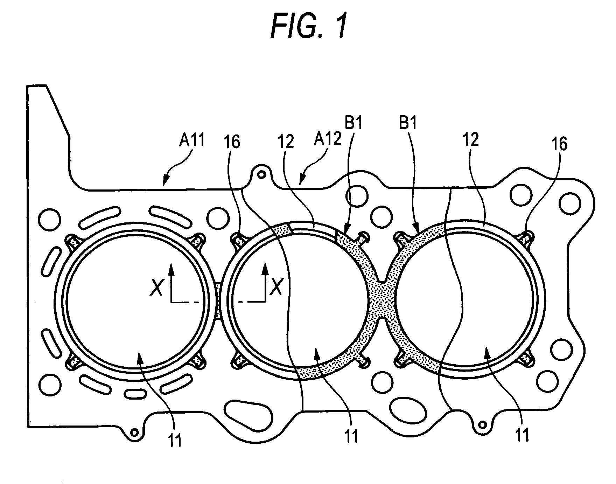

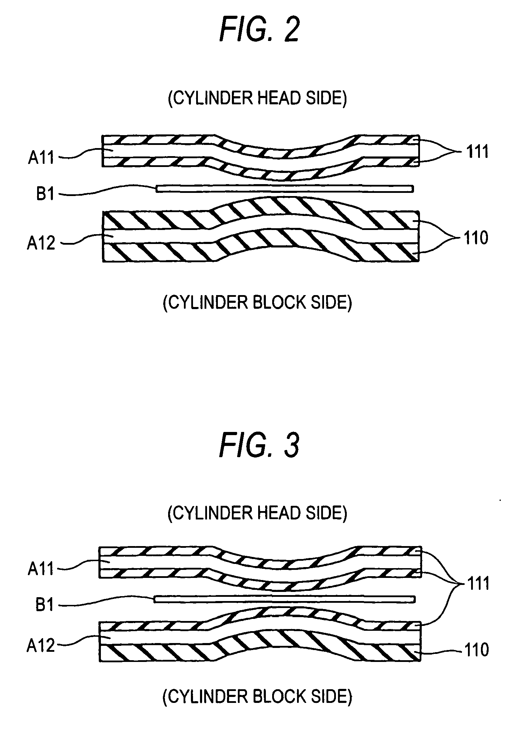

A plane view showing one embodiment of a metal gasket of this embodiment is shown in Fig. 1. Fig. 2 is a cross sectional view taken on line X-X of Fig. 1. The metal gasket of Fig. 1 roughly comprises a pair of elastic metal substrates in which beads are formed on a plurality of cylinder port peripheral portions, and a thin metal plate held tightly between the above-mentioned pair of elastic metal substrates through the above-mentioned beads and having openings corresponding to the cylinder ports. The metal gasket is constituted by two sheets of elastic metal substrates A11 and A12 provided with convex beads 12 formed along peripheral portions of respective cylinder ports 11 of a multicylinder engine, and a thin metal plate B1 comprising annular portions surrounding the peripheral portions of the respective cylinder ports 11 with a required width and formed opposite to convex portions of the beads of the elastic metal substrates A11 and A12.

The thin metal plate B1 is constituted so as to be integrally connected at adjacent portions. In that case, the thin metal plate is fixed to one elastic metal substrate A12 at a plurality of metal sites (indicated by reference numeral 16, 4 portions in an example shown in Fig. 1).

In this embodiment, the elastic metal substrate A12, which is located at a cylinder block side (i.e., an lower side in Fig. 2), preferably has a foamed rubber layer 110. On the other hand, an unfoamed rubber layer is formed on the elastic metal substrate A11 disposed on a cylinder head side (i.e., an upper side in Fig. 2). The cylinder head is low in temperature compared to the cylinder block, so that it is difficult to be affected by heat. Accordingly, even the unfoamed rubber later 111 can provide sufficient sealing properties. However, the cylinder head is prepared by casting similarly to the cylinder block, so that casting holes exist thereon or a surface thereof is roughened to cause the possibility of deteriorating sealing performance. Consequently, in the metal gasket of this embodiment, it is preferred that an foamed rubber layer similar to the above is also formed on the elastic metal substrate A11 on the cylinder head side, although not shown in the drawing.

Further, as described above, the foamed rubber layer 110 is particularly effective for sealing properties to the casting holes or roughened surface of the cylinder block or cylinder head. However, there is a fear that permanent set occurs by pressure contact with the thin metal plate B to gradually deteriorate the sealing performance. Consequently, as shown in Fig. 3, in place of the foamed rubber layer, the unfoamed rubber layer 111 may be formed on a surface on a thin metal plate B1 side of the elastic metal substrate A12. When the foamed rubber layer is also formed on the elastic metal substrate A11 on the cylinder head side, the unfoamed rubber layer 111 is similarly formed on the thin metal plate B1 side of the elastic metal substrate A11.

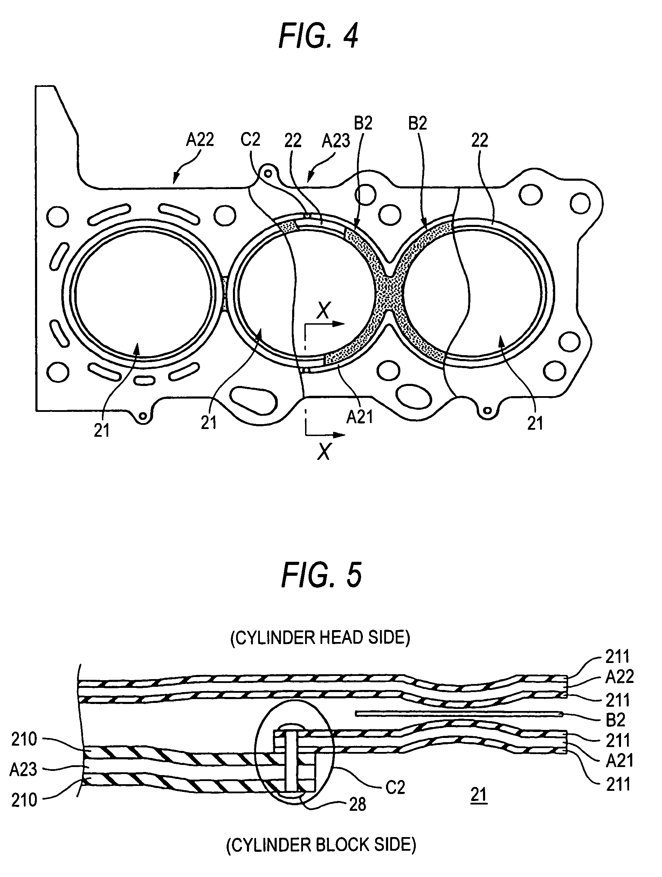

As another embodiment, a partially cutaway plane view showing one embodiment of a metal gasket of the invention is shown in Fig. 4. Fig. 5 shows a cross sectional view taken on line X-X of Fig. 4. As shown in Fig. 4 and Fig. 5, the metal gasket of this embodiment is constituted by arranging and laminating a thin metal plate B2 having cylinder ports 21 between a first elastic metal substrate A21 and a second elastic metal substrate A22, and further, fixing the first elastic metal substrate to a third elastic metal substrate A23 at a plurality of portions C2 through mechanical connecting members 28 such as grommets or rivets. At the time of mounting, the metal gasket is arranged so as to locate the second elastic metal substrate A22 on a cylinder head side and the third elastic metal substrate A13 on a cylinder block side.

The thin metal plate B2 has a plane shape in which rings having openings corresponding to the cylinder ports 21 are connected. The first elastic metal substrate A21 has openings corresponding to the cylinder ports 21 of the thin metal plate B2, and beads 22 are formed on peripheral portions of the openings. Further, unfoamed rubber layers 211 are formed on both surfaces thereof. The second elastic metal substrate A22 has openings corresponding to the cylinder ports 21 of the thin metal plate B, and beads 22 are formed on peripheral portions of the openings. Further, unfoamed rubber layers 211 are formed on both surfaces thereof. The third elastic metal substrate A23 has openings capable of accommodating the first elastic metal substrate, and beads are formed on peripheral portions of the openings. Further, foamed rubber layers 210 are formed on both surfaces thereof.

The third elastic metal substrate A23 is in point contact with the first elastic metal substrate A21 through the connecting members 28, so that the amount of heat transfer from the cylinder ports 21 is small. Further, a hole for allowing cooling water to flow is opened in the third elastic metal substrate A23, which also contributes to a cooling effect. Accordingly, thermal deterioration of the foamed rubber layer 210 does not occur. Furthermore, the cylinder ports 21 are formed in the first elastic metal substrate A21 and the second first elastic metal substrate A22, and the unfoamed rubber layers 211 are foamed to high temperature. However, the unfoamed rubber layers 211 are high in heat resistance, so that practically, no problem arises at all. In the invention, there is no limitation on the unfoamed rubber layer 211, but for such a reason, one excellent in heat resistance is preferably used.

As shown in Fig. 7 and Fig. 6 of a cross sectional view taken on line X-X of Fig. 7, the bead of the present invention preferably has a flection C3 comprising a curved portion having a curvature radius (R) of 0.5 mm or more in a cross-sectional surface perpendicular to the circumferential direction of the bead. Figs. 6 and 7 shows elastic metal substrates A31 and A32 that has a bead, e.g., beads 32 and 33. Furthermore, as shown in Fig. 9, it is preferable that the foamed rubber layer 34 is disposed on the cylinder block side of the elastic metal substrate A32. Casting holes are formed on a surface of a cylinder block or a cylinder head 310 in many cases (e.g., see Fig. 10). Some cylinder block has large casting holes having a diameter exceeding 1.5 mm.

When the flection C4 of the bead is bent so as to have a corner portion that does not have a curved portion, as shown in Fig. 8, a clearance between the corner potion and the casting hole reduces sealing properties. On the other hand, as shown in Fig. 6, when the bead has a flection comprising a curved portion, the flection of the bead is elastically deformed so as to cover the casting hole at the time of mounting to secure sealing. Such a flection is effective in that the contact width with the cylinder head or cylinder block surface obtained under the same fastening conditions can be enlarged to 1.5 to 2.0 times or more than that of a gasket having a bead having a corner portion. The elastic metal substrate as used herein are generally made of a stainless steel plate having a thickness of 0.2 to 0.3 mm. The curvature radius (R) of the curved starting point is preferably 0.5 mm or more, more preferably 1.5 mm or more in order to surely cover the casting hole having a diameter exceeding 1.5 mm by elastic deformation. Such a flection can be easily formed by performing bending while rounding. The formation of a flection in a bead of an elastic metal substrate of the metal gasket enhances the sealing effect to a cylinder block or cylinder head having larger casting holes or higher surface roughness, coupled with the foamed rubber layer.

EXAMPLES

The present invention is now illustrated in greater detail with reference to Examples and Comparative Examples, but it should be understood that the present invention is not to be construed as being limited thereto.

Examples 1 to 3 and

Comparative Examples 1 to 7

Sample Preparation

Each of compositions containing a polymer, a foaming agent, a vulcanizing agent and a vulcanization accelerator as shown in Table 1 was dissolved into an organic solvent containing toluene and ethyl acetate to prepare a coating liquid in such a way that the solid concentration of the composition in each of the coating liquids was 40 wt% based on the weight of the coating liquid. Each of the coating liquids was applied with a roll coater on a stainless steel that has been applied a non-chromate treatment and a primer treatment to obtain a pre-foamed layer (see Table 1 for thickness of the each pre-foamed layer), and then a heat treatment was performed at 210°C for 10 minutes to obtain samples 1-10 each having a foamed rubber layer. Evaluations of the samples were conducted as follows.

Table 1

| | Polymer (A) | | | Foaming Agent (B) | Amount of (A) (wt%) | Amount of (B) (wt%) | Thickness of pre-foamed layer (μm) | Vulcanizing agent | Vulcanization Accelerator | |
|---|---|---|---|---|---|---|---|---|---|---|
| | Kind | AN value (%) | Mooney value | | | | | | Kind | Product name |
| Sample 1 | NBR | 40 | 50 | Heat Decomposable Type (Azodicarbonamide -based) | 50 | 25 | 35 | Sulfur | Sulfenamidebased | Nocceler CZ |
| Sample 2 | NBR | 41.5 | 50 | Heat Decomposable Type (Dinitrosopentamethy lenetetramine-based) | 30 | 40 | 20 | Sulfur | Sulfenamidebased | Nocceler CZ |
| Sample 3 | H-NBR | 43.2 | 70 | Heat Decomposable Type (Azodicarbonamide -based) | 50 | 30 | 15 | Sulfur | Thiazole-based / Zinc dithiocarbamate-based | Nocceler M / Nocceler PZ |
| Sample 4 | NBR | 43 | 45 | Heat Decomposable Type (Azodicarbonamide -based) | 50 | 25 | 60 | Sulfur | Thiuram-based | Nocceler TRA |
| Sample 5 | NBR | 43 | 45 | Microcapsule Type (Vinylidene chlorideacrylonitrile copolymer) | 50 | 25 | 35 | Sulfur | Sulfenamide-based | Nocceler CZ |
| Sample 6 | NBR | 41 | 80 | Heat Decomposable Type (Azodicarbonamide -based) | 50 | 30 | 40 | Sulfur | Thiazole-based / Thiuram-based | Nocceler M / Nocceler TT |
| Sample 7 | NBR | 43 | 45 | Heat Decomposable Type (Dinitrosopentamethy lenetetramine-based) | 50 | 15 | 35 | Sulfur | Thiazole-based / Thiuram-based | Nocceler M / Nocceler TT |
| Sample 8 | NBR | 41.5 | 50 | Heat Decomposable Type (Azodicarbonamide -based) | 15 | 30 | 40 | Sulfur | Thiazole-based / Zinc dithiocarbamate-based | Nocceler M / Nocceler PZ |
| Sample 9 | NBR | 41.5 | 50 | Microcapsule Type (Vinylidene chloride-acrylonitrile copolymer) | 50 | 25 | 80 | Sulfur | Thiazole-based / Thiuram-based | Nocceler M / Nocceler TT |

(continued)

| | Polymer (A) | | | Foaming Agent (B) | Amount of (A) (wt%) | Amount of (B) (wt%) | Thickness of pre-foamed layer (μm) | Vulcanizing agent | Vulcanization Accelerator | |
| --- | --- | --- | --- | --- | --- | --- | --- | --- | --- | --- |
| | Kind | AN value (%) | Mooney value | | | | | | Kind | Product name |
| Sample 10 | NBR | 41.5 | 50 | None | 50 | 25 | 35 | Sulfur | Sulfenamide-based | Nocceler CZ |

Note 1: Polymers (A) used in Samples 1-3 and 8-10 are manufactured by ZEON Corporation. Polymers (A) used in Samples 2, 4-7 are manufactured by JSR Corporation
Note 2: Foaming agents (B) used in Samples 1-8 and 10 are manufactured by SANKO KASEI Co., Ltd. Foaming agents (B) used in Samples 5 and 9 are manufactured by Matsumoto Yushi-Seiyaku Co., Ltd.
Note 3: Sulfurs used in Samples 1-10 are manufactured by Tsurumi Chemical Corporation.
Note 4: Vulcanization accelerators used in Samples 1-10 are manufactured by Ouchishinko Chemical Industrial Co., Ltd.

Evaluation Method

1. Foaming Factor

The foaming factor was calculated from a thickness of a pre-foamed layer and a thickness of a foamed rubber layer using the following formula (the thicknesses thereof were measured by using a micrometer).

$$\text{(Thickness of foamed rubber layer / Thickness of pre-foamed layer)}$$

$$= \text{Foaming factor}$$

2. Measurement of Open Cell Ratio

Each of the samples was soaked into water and then subjected to a vacuum degassing to replace the air in cells in the foamed rubber layer with water. The test was conducted until a weight after the replacement with water became constant, and an open cell ratio was calculated by using the following formula.

$$\text{Weight of replaced water /}$$

$$\text{(Volume of foamed rubber layer - Volume of pre-foamed layer)} \times 100$$

$$= \text{Open cell ratio}$$

3. Heat Resistance Flowability

The samples were subjected to a test under the conditions of a surface pressure of 100 MPa at 150°C for 22 hours, and appearances after the test were observed with a microscope to evaluate the appearance based on the following criteria.

Evaluation Criteria

A: without rubber flow
B: with rubber flow

4. Torque Down Rate

Each of the samples was subjected to a test to measure a torque down rate as follows.

(1) Each of the samples was fastened to a flange with a bolt by a torque wrench to measure an initial torque.
(2) In the state of (1) mentioned above, the sample was cooled to -35°C, and a mark was appended to the flange and the bolt by appending the mark at a position of a contact surface thereof, and then the bolt was unfastened.
(3) Each of the samples was re-fastened to the marked flange with the marked bolt by a torque wrench, in such a manner that marks of the flange and the bolt was aligned, to measure a torque at -35°C.

The initial torque (at an ordinary temperature) of each of the samples was compared with the torque at -35°C, and torque down rate was calculated by using the following formula.

$$\text{[ Initial torque - (Torque at -35°C)] / Initial torque} \times 100 = \text{Torque down rate}$$

5. Sealing Test

Gaskets of Examples 1 to 3 and Comparative Examples 1 to 7, having a shape as shown in the following Tables 2 and 3, were prepared by using above-mentioned Samples 1 to 10. Then, each of the gaskets of Examples and Comparative Examples were set on the flange having a shape shown in Tables 2 and 3, and the gaskets were subjected to the following tests to evaluate the gaskets by the following criteria.

Evaluation Criteria

A: without leakage of air
B: with leakage of air

Casting hole Sealing Test

(1) As shown in Fig. 10, each of the samples was processed to obtain a gasket having a half bead shape of a height of 0.2 mm and a width of 1.5 mm and a half bead center diameter of 51.5 mm. The gasket was set on a flange having a casting hole (diameter: 2.5 mm, depth: 2.5 mm) so that the casting hole was located at a position of the half beat center and then fastened to the flange at a bead linear load of 10 N/mm.
(2) In the state of (1), air (200 kPa) was supplied to the flange through a nozzle at the center of the flange to measure an amount of leaked air.

Surface Roughness Sealing Test

(1) Each of the samples was processed to obtain a gasket having a half bead shape of a height of 0.2 mm and a width of 1.5 mm and a half bead center diameter of 51.5 mm. The gasket was set on a flange having a surface roughness of 50 Ra so that a casting hole was located at a position of the half bead center and then fastened to the flange at a bead linear load of 10 N/mm.
(2) In the state of (1), air (200 kPa) was supplied to the flange through a nozzle at the center of the flange to measure an amount of leaked air.

Table 2

| Casting hole Sealing Test | | |
|---|---|---|
| Flange | Material | SS50C was used for flange and bolt |
| | Surface Roughness | 12 Ra |
| | Casting hole Diameter | Diameter of 2.5 mm × depth of 2.5 mm |
| | Bead Linear Load | 10 N/mm |
| Gasket | Shape | Outer diameter 75 mm × inner diameter 47 mm<br>Bead center diameter: 51.5 mm<br>Half bead: height of 0.2 mm × width of 1.5 mm |

Table 3

| Surface Roughness Sealing Property | | |
|---|---|---|
| Flange | Material | SS50C was used for flange and bolt |
| | Surface Roughness | 50 Ra |
| | Bead Linear Load | 10 N/mm |

(continued)

| Surface Roughness Sealing Property | | |
|---|---|---|
| Gasket | Shape | Outer diameter 75 mm ×inner diameter 47 mm<br>Bead center diameter: 51.5 mm<br>Half bead: height of 0.2 mm × width of 1.5 mm |

Results of the foregoing measurements and experiments are shown in the following Table 4.

Table 4

| | Sample No. | Rubber Layer Thickness before Foaming (μm) | Foaming Factor | Open cell ratio (%) | Heat Resistance Flowability | Torque Down Rate (%) | Sealing Test | |
|---|---|---|---|---|---|---|---|---|
| | | | | | | | Casting hole | Surface Roughness |
| Example 1 | Sample 1 | 35 | 3 | 100 | A | 0 | A | A |
| Example 2 | Sample 2 | 20 | 4 | 100 | A | 0 | A | A |
| Example 3 | Sample 3 | 15 | 3 | 100 | A | 0 | A | A |
| Comparative Example 1 | Sample 4 | 60 | 2.5 | 100 | B | 5 | A | A |
| Comparative Example 2 | Sample 5 | 35 | 3 | 20 | A | 40 | A | A |
| Comparative Example 3 | Sample 6 | 40 | 1.3 | 60 | A | 0 | B | B |
| Comparative Example 4 | Sample 7 | 35 | 1.2 | 85 | A | 0 | B | B |
| Comparative Example 5 | Sample 8 | 40 | 1.2 | 80 | A | 0 | B | B |
| Comparative Example 6 | Sample 9 | 80 | 2.5 | 20 | B | 60 | A | A |
| Comparative Example 7 | Sample 10 | 35 | 1 | 0 | A | 0 | B | B |

From Table 4, it is apparent that the gasket of Examples each having the foamed rubber layer according to the present invention are capable of achieving satisfactory results in terms of heat resistance flowability, torque down, and sealing test. In contrast, the gasket of Comparative Example 1 which has the excessive thickness of the pre-foamed layer has the bad heat resistance flowability and the inferior torque down. The gasket of Comparative Example 2 which was prepared by using the microcapsule type foaming agent has the small open cell ratio and the inferior torque down. The gasket of Comparative Example 4 of the excessive mooney value has the low foaming factor and the inferior sealing property. The gasket of Comparative Example 5 prepared by using the excessively small amount of foaming agent has the low foaming factor and the inferior sealing property. The gasket of Comparative Example 6 prepared by using the excessively small amount of polymer has the small amount of open cell ratio, the worst torque down, and the inferior heat resistance flowability. Since the gasket of Comparative Example 7 which was prepared by using the microcapsule type foaming agent has the excessively thickness of the pre-foamed layer, the gasket has the worst foaming factor, the smallest open cell ratio, and the inferior sealing property.

As shown above, according to the present invention, a metal gasket whose foamed rubber layer does not deteriorate

under high temperature and pressure and does not shrink at low temperature, and which can sufficiently seal even a cylinder block having large casting holes or high surface roughness is obtained.

**Claims**

1. A metal gasket adapted to be disposed between a cylinder head and a cylinder block, which comprises:

   a thin metal plate (B1, B2, B3) having a first opening;
   a first elastic metal substrate (A12, A21, A2);
   a second elastic metal substrate (A11, A22, A1); and
   at least one foamed rubber layer (110, 210, 34) for sealingly contacting the cylinder block,

   wherein each of the first and second elastic metal substrates have a second opening at a position corresponding to the position of the first opening, and have a bead (12, 22 32) formed on a peripheral portion of the second opening,
   wherein the thin metal plate (B1, B2, B3) is disposed between the beads (12, 22, 32) of the first and second elastic metal substrates,
   wherein the at least one foamed rubber layer (110, 210, 34) is provided by a process comprising foaming a pre-foamed layer comprising a pre-foamed composition,
   wherein the pre-foamed layer has a thickness of 15 to 50 $\mu$m and a ratio of the thickness of the rubber layer after foaming to that before foaming of 2 to 4,
   **characterized in that**
   the foamed rubber layer (110, 210, 34) has an open cell ratio of 80 % or more.

2. The metal gasket according to claim 1,
   wherein the first elastic metal substrate (A12), which is disposed so as to face the cylinder block, has the foamed rubber layers (110) disposed on both sides thereof.

3. The metal gasket according to claim 1,
   which further comprises an unfoamed rubber layer (111),
   wherein the first elastic metal substrate (A12), which is disposed so as to face the cylinder block, has a first surface that faces to the cylinder block and a second surface opposite to the first surface,
   wherein the first elastic metal substrate (A12) has the foamed rubber layer (110) disposed on the first surface and the unfoamed rubber layer (111) disposed on the second surface.

4. The metal gasket according to claim 1,
   which further comprises a third elastic metal substrate (A23) and unfoamed rubber layers (211),
   wherein each of the first and second elastic metal substrates (A21, A22) have the unfoamed rubber layers (211) disposed on both sides thereof,
   wherein the third elastic metal substrate (A23) comprises:

   a third opening capable of accommodating the first elastic metal substrate (A21); a bead formed on a peripheral portion of the third opening; and the foamed rubber layers (210) disposed on both sides thereof,

   wherein the first elastic metal substrate (A21) is fixed to the third elastic metal substrates (A23) with plural connecting members (28).

5. The metal gasket according to claim 1,
   wherein the bead (32) has a flection comprising a curved portion having a curvature radius of 0.5 mm or more in a cross-sectional surface perpendicular to the circumferential direction of the bead,
   wherein the first elastic metal substrate (A2), which is disposed so as to face the cylinder block, has a first surface that faces to the cylinder block and a second surface opposite to the first surface,
   wherein the first elastic metal substrate (A2) has the foamed rubber layer (34) disposed on the first surface.

**Patentansprüche**

1. Metalldichtung, die zum Anordnen zwischen einem Zylinderkopf und einem Zylinderblock eingerichtet ist, wobei sie umfasst:

eine dünne Metallplatte (B1, B2, B3), die eine erste Öffnung hat;
ein erstes elastisches Metallsubstrat (A12, A21, A2);
ein zweites elastisches Metallsubstrat (A11, A22, A1); und
wenigstens eine Schaumgummischicht (110, 210, 34), die abdichtend mit dem Zylinderblock in Kontakt ist,

wobei das erste und das zweite elastische Metallsubstrat jeweils eine zweite Öffnung an einer Position haben, die der Position der ersten Öffnung entspricht, und eine Wulst (12, 22, 32) haben, die an einem Umfangsabschnitt der zweiten Öffnung ausgebildet ist,
die dünne Metallplatte (B1, B2, B3) zwischen den Wulsten (12, 22, 32) des ersten und des zweiten elastischen Metallsubstrats angeordnet ist,
die wenigstens eine Schaumgummischicht (110, 210, 34) mit einem Prozess geschaffen wird, der Verschäumen einer vorgeschäumten Schicht umfasst, die eine vorgeschäumte Zusammensetzung umfasst,
und die vorgeschäumte Schicht eine Dicke von 15 bis 50 $\mu$m und ein Verhältnis der Dicke der Gummischicht nach dem Verschäumen zu der vor dem Verschäumen von 2 zu 4 hat,
**dadurch gekennzeichnet, dass**
die Schaumgummischicht (110, 210, 34) einen Anteil offener Zellen (open cell ratio) von 80 % oder mehr hat.

2. Metalldichtung nach Anspruch 1,
wobei an dem ersten elastischen Metallsubstrat (A12), das so angeordnet ist, dass es dem Zylinderblock zugewandt ist, die Schaumgummischichten (110) an beiden Seiten desselben angeordnet sind.

3. Metalldichtung nach Anspruch 1,
die des Weiteren eine unverschäumte Gummischicht (111) umfasst,
wobei das erste elastische Metallsubstrat (A12), das so angeordnet ist, dass es dem Zylinderblock zugewandt ist, eine erste Fläche, die dem Zylinderblock zugewandt ist, und eine der ersten Fläche gegenüberliegende zweite Fläche hat,
an dem ersten elastischen Metallsubstrat (A12) die Schaumgummischicht (110) an der ersten Fläche angeordnet ist und die unverschäumte Gummischicht (111) an der zweiten Fläche angeordnet ist.

4. Metalldichtung nach Anspruch 1,
die des Weiteren ein drittes elastisches Metallsubstrat (A23) und unverschäumte Gummischichten (211) umfasst,
wobei an dem ersten und dem zweiten elastischen Metallsubstrat (A21, A22) die unverschäumten Gummischichten (211) jeweils an beiden Seiten derselben angeordnet sind,
und das dritte elastische Metallsubstrat (A23) umfasst:

eine dritte Öffnung, die das erste elastische Metallsubstrat (A21) aufnehmen kann;
eine Wulst, die an einem Umfangsabschnitt der dritten Öffnung ausgebildet ist; und

die Schaumgummischichten (210), die an beiden Seiten desselben angeordnet sind,
wobei das erste elastische Metallsubstrat (A21) mit mehreren Verbindungselementen (28) an dem dritten elastischen Metallsubstrat (A23) befestigt ist.

5. Metalldichtung nach Anspruch 1,
wobei die Wulst (32) eine Biegung hat, die einen gekrümmten Abschnitt mit einem Krümmungsradius von 0,5 mm oder mehr in einer Querschnittsfläche senkrecht zu der Umfangsrichtung der Wulst umfasst,
das erste elastische Metallsubstrat (A2), das so angeordnet ist, dass es dem Zylinderblock zugewandt ist, eine erste Fläche, die dem Zylinderblock zugewandt ist, und eine der ersten Fläche gegenüberliegende zweite Fläche hat,
und an dem ersten elastischen Metallsubstrat (A2) die Schaumgummischicht (34) an der ersten Fläche angeordnet ist.

**Revendications**

1. Joint métallique adapté pour être disposé entre une culasse et un bloc-cylindres, qui comprend :

une fine plaque métallique (B1, B2, B3) ayant une première ouverture ;
un premier substrat métallique élastique (A12, A21, A2) ;
un deuxième substrat métallique élastique (A11, A22, A1) ; et

au moins une couche de caoutchouc expansé (110, 210, 34) destinée à établir un contact étanche avec le bloc-cylindres,

dans lequel chacun des premier et deuxième substrats métalliques élastiques a une deuxième ouverture à une position correspondant à la position de la première ouverture, et a un bourrelet (12, 22, 32) formé sur une partie périphérique de la deuxième ouverture,

dans lequel la fine plaque métallique (B1, B2, B3) est disposée entre les bourrelets (12, 22, 32) des premier et deuxième substrats métalliques élastiques,

dans lequel l'au moins une couche de caoutchouc expansé (110, 210, 34) est obtenue par un procédé comprenant l'expansion d'une couche pré-expansée comprenant une composition pré-expansée,

dans lequel la couche pré-expansée a une épaisseur de 15 à 50 $\mu$m et un rapport entre l'épaisseur de la couche de caoutchouc après expansion et celle avant expansion de 2 à 4,

**caractérisé en ce que**

la couche de caoutchouc expansé (110, 210, 34) a une proportion de cellules ouvertes d'au moins 80 %.

2.  Joint métallique selon la revendication 1,
    dans lequel le premier substrat métallique élastique (A12), qui est disposé de manière à faire face au bloc-cylindres, a les couches de caoutchouc expansé (110) disposées sur les deux côtés de celui-ci.

3.  Joint métallique selon la revendication 1,
    qui comprend en outre une couche de caoutchouc non expansé (111),
    dans lequel le premier substrat métallique élastique (A12), qui est disposé de manière à faire face au bloc-cylindres, a une première surface qui fait face au bloc-cylindres et une deuxième surface à l'opposé de la première surface,
    dans lequel le premier substrat métallique élastique (A12) a la couche de caoutchouc expansé (110) disposée sur la première surface et la couche de caoutchouc non expansé (111) disposée sur la deuxième surface.

4.  Joint métallique selon la revendication 1,
    qui comprend en outre un troisième substrat métallique élastique (A23) et des couches de caoutchouc non expansé (211),
    dans lequel chacun des premier et deuxième substrats métalliques élastiques (A21, A22) a les couches de caoutchouc non expansé (211) disposées sur les deux côtés de celui-ci,
    dans lequel le troisième substrat métallique élastique (A23) comprend :

    une troisième ouverture susceptible d'accueillir le premier substrat métallique élastique (A21) ; un bourrelet formé sur une partie périphérique de la troisième ouverture ; et les couches de caoutchouc expansé (210) disposées sur les deux côtés de celui-ci,

    dans lequel le premier substrat métallique élastique (A21) est fixé au troisième substrat métallique élastique (A23) avec une pluralité d'éléments de connexion (28).

5.  Joint métallique selon la revendication 1,
    dans lequel le bourrelet (32) a une flexion comprenant une partie courbée ayant un rayon de courbure d'au moins 0,5 mm dans une surface en coupe transversale perpendiculaire à la direction circonférentielle du bourrelet,
    dans lequel le premier substrat métallique élastique (A2), qui est disposé de manière à faire face au bloc-cylindres, a une première surface qui fait face au bloc-cylindres et une deuxième surface à l'opposé de la première surface,
    dans lequel le premier substrat métallique élastique (A2) a la couche de caoutchouc expansé (34) disposée sur la première surface.

EP 1 582 782 B1

# FIG. 1

15

## FIG. 2

(CYLINDER HEAD SIDE)

A11 — 111

B1 —

A12 — 110

(CYLINDER BLOCK SIDE)

## FIG. 3

(CYLINDER HEAD SIDE)

A11 —

B1 — 111

A12 — 110

(CYLINDER BLOCK SIDE)

## FIG. 4

A22   C2   22   A23   B2   B2   22

X

X

A21

21   21   21   21

## FIG. 5

(CYLINDER HEAD SIDE)

211
A22
211
B2
211
A21
211

210
A23
210

C2
28   21

(CYLINDER BLOCK SIDE)

## FIG. 6

## FIG. 7

FIG. 8

FIG. 9

FIG. 10

CASTING HOLE

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003287135 A
- JP 586070U A
- JP 632836U A

- EP 0592142 A
- EP 1306587 A